(19) Europäisches Patentamt
European Patent Office
Office européen des brevets

(11) **EP 4 708 106 A1**

(12) **EUROPEAN PATENT APPLICATION**

(43) Date of publication:
**11.03.2026 Bulletin 2026/11**

(21) Application number: **24198429.3**

(22) Date of filing: **04.09.2024**

(51) International Patent Classification (IPC):
**G06F 30/00** (2020.01)    **G06V 10/22** (2022.01)
**G06V 10/94** (2022.01)

(52) Cooperative Patent Classification (CPC):
**G06F 30/27; G06V 10/22; G06V 10/94;**
G06F 2119/18; G06F 2119/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **SCHOCH, Nicolai**
**69120 Heidelberg (DE)**
• **HOERNICKE, Mario**
**76829 Landau (DE)**

(74) Representative: **Maiwald GmbH**
**Engineering**
**Elisenhof**
**Elisenstrasse 3**
**80335 München (DE)**

(54) **CONFIDENCE HEAT MAPS FOR AI-BASED PROCESSING OF P&AENG DOCUMENTS**

(57)    There is disclosed a method to assist in evaluating confidence estimations in a structured representation of information in an industrial plant context. The method comprises obtaining a target structured representation of information comprising one or more target pieces of information associated with confidence estimations determined by an information model, wherein at least part of the one or more target pieces of information overlap with one or more pieces of information comprised by one or more different structured representations. The method further comprises generating a confidence heat map based on the target structured representation, wherein the generated confidence heat map indicates confidences for the one or more target pieces of information based on the associated confidence estimations. The method further comprises laying the generated confidence heat map over at least part of an input document of one or more input documents inputted to the IM and based on which the target structured representation and the one or more different structured representations are obtained by the IM, wherein the one or more input documents are associated with a same process plant.

Fig. 1

# Description

FIELD OF THE INVENTION

The invention relates to a method and a data processing apparatus to assist in evaluating probability estimations in a structured representation of information in an industrial plant context. The invention further relates to a data processing system, a computer-readable medium, a computer program product and a use of a probability heat map generated according to the method.

BACKGROUND

Automation Engineering of a process automation system in an industrial plant context is still a very manual effort due to limited support for the interpretation and processing of process design specification documents. Even though standards for digital data exchange between process and automation engineering do exist, those formats are rarely used and consequently the immense automation potential in automation engineering cannot be lifted.

Hence, there is room and need for improvement regarding the usage of automation potential in automation engineering, in particular regarding the usage of artificial intelligence/machine learning (AI/ML) model confidence/uncertainty values in process design specification documents.

SUMMARY

In view of the above, it is an object of the present disclosure to overcome at least part of the drawbacks available regarding the usage of AI/ML model confidence/uncertainty values in process design specification documents.

Therefore, to address one or more of these drawbacks, there is provided, in a first aspect, a method to assist in evaluating confidence estimations in a structured representation of information in an industrial plant context. The method comprises obtaining a target structured representation of information comprising one or more target pieces of information associated with confidence estimations determined by an information model, wherein at least part of the one or more target pieces of information overlap with one or more pieces of information comprised by one or more different structured representations. The method further comprises generating a confidence heat map based on the target structured representation, wherein the generated confidence heat map indicates confidences for the one or more target pieces of information based on the associated confidence estimations. The method further comprises laying the generated confidence heat map over at least part of an input document of one or more input documents inputted to the IM and based on which the target structured representation and the one or more different structured representations are obtained by the IM, wherein the one or more input documents are associated with a same process plant.

It shall be noted that by structured representation of information it is meat that information, which may be obtained from an unstructured representation like an input image, are represented in a structured way, which may be readable and/or understandable by a computer or IM.

By pieces of information it is meant information provided in the structured representation. According to several examples, a piece of information may be an element identified in an input image, for example a symbol in a (topology) image. Such symbol may represent any component of a process plant, for example a tank, a reactor or a valve without being limited to that. Further, according to several examples, a piece of information may also be a textual information, for example a word, a phrase, a sentence or a paragraph. Such textual information may relate to any component of a process plant, for example a tank, a reactor or a valve without being limited to that. Furthermore, according to several examples, a piece of information may also be a numerical information, for example numbers or codes provided in a table. Such numerical information may relate to any component of a process plant, for example a tank, a reactor or a valve without being limited to that.

The pieces of information comprised by the structured representation are obtained, through processing by the IM, from pieces of information comprised by the one or more input documents. It shall be noted that a structured representation of information may represent a structured representation of the information provided in an input document (which may be understood as representing an unstructured representation). Thus, the pieces of information comprised by the structured representation correspond to and/or depend on the pieces of information comprised in the input document. Hence, said in other words, for each piece of information comprised in a structured representation a corresponding counter piece of information is comprised in an input document.

It shall be noted that a confidence estimation may represent a percentage value indicated in a range from zero to one, from zero to ten or from zero to 100 for example without being limited to that.

It shall further be noted that by overlap or overlapping pieces of information, it may be meant that different structured representations comprise a same piece of information. For example, it may be assumed herewith a first structured representation and a second structured representation. The first structured representation may be obtained from a first input document being an input image for example. The second structured representation may be obtained from a second input document being a textual information for example. The first input document may comprise as a piece of information a symbol that represents a tank. Hence, the first structured representation may comprise a first piece of information that represents the tank. The second input document may comprise as a piece of information a paragraph that defines technical details of the tank. Hence, the second structured representation may comprise a second piece of information that represents the tank. Thus, the first piece of information of the first structured representation and the second piece of information of the second structured representation both represent or refer to the same tank. Hence, the first piece of information and the second piece of information, which are comprised by different structured representations, are to be understood as having a certain overlap, i.e. to overlap each other. Instead of a first and second structured representations as outlined above, the same holds true for three or more structured representations.

Thus, by overlapping pieces of information it may be understood same or related pieces of information. Said in other words, it may be understood that a content of a first piece of information overlaps (partly or entirely) a content of a second piece of information, or it may be understood that a content of a first piece of information is (partly or entirely) the same as a content of a second piece of information. Instead of a first and second pieces of information as outlined above, the same holds true for three or more pieces of information.

By different structured representations it may be meant that a first structured representation is obtained from a first input document and that a second structured representation is obtained from a second input document, and the first and second structured representations are different structured representation. However, by different structured representations it may also be meant that one common or joint structured representation is obtained from (jointly or subsequently processing) a first input document and a second input document. The common or joint structured representation may then be understood to comprise a first part that comprises information obtained from the first input document and a second part that comprises information obtained from the second input document. For reasons of simplification, such first and second parts may also be considered as first and second structured representations that are different from each other. The same holds true for three or more structured representations and/or three or more parts.

It shall further be noted that the indicated confidences may be, for example, confidence values, confidence levels, aggregated confidence classes like low confidence, medium confidence and high confidence, or any combination thereof.

By input documents it may be meant engineering design specification documents that are associated with a same engineering project and/or the same process plant.

By laying the generated confidence heat map over at least part of an input document it may be meant that the confidence heat map, which indicates confidences for the one or more target pieces of information, is laid over at least part of an input document, which comprises pieces of information that correspond to and/or represent the target pieces of information from the target structured representation. Said in other words, the confidence heat map indicates confidences for the one or more target pieces of information, wherein a target piece of information may be a certain tank or a certain valve for example. The input document, over which the confidence heat map is laid over, may comprise (for example as image information or textual information) one or more pieces of information, wherein a piece of information may represent such certain tank and/or such certain valve for example. Hence, when the confidence heat map is laid over the input document, it is laid over such that confidence values for a certain target piece of information are associated with a corresponding piece of information comprised by the input document. For example, it may be said that confidence values of the confidence heat map for the certain tank and/or the certain valve are laid over the certain tank and/or the certain valve as comprised by the input document. In the input document, the certain tank and/or the certain valve may be represented by a symbol, a number or (descriptive) text for example. Hence, by laying the confidence heat map over at least part of the input document, such symbol, number or (descriptive) text may be associated with the corresponding confidence indicated in the confidence heat map.

The method according to the first aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to several examples of the present disclosure, the confidence estimations associated with target pieces of information that overlap pieces of information of different structured representations may be joint confidence estimations. The method may further comprise determining a joint confidence estimation for a target piece of information that overlaps with one or more pieces of information of the different structured representations based on calculating a weighted sum over the respective confidence estimations associated with the target piece of information and the one or more pieces of information of the different structured representations that overlap each other.

It shall be noted that by a joint confidence estimation, it may be understood, for example, an average confidence estimation determined over the respective confidence estimations associated with the overlapping pieces of information.

Hence, potential uncertainties provided by a first structured representation may be further evaluated by further considering further structured representations.

Thus, potential uncertainties may be confirmed or may be resolved. In any way, trust of the human engineer in the confidence estimations is increased.

According to several examples of the present disclosure, the calculating the weighted sum may comprise assigning a higher weight to a confidence estimation associated with a first certainty than to a confidence estimation associated with a second certainty lower than the first certainty.

Hence, confidence estimations with higher certainty are more strongly considered than confidence estimations with lower certainty. Thus, a total certainty is increased.

According to several examples of the present disclosure, the obtaining the target structured representation may comprise obtaining, based on inputting the one or more input documents to the IM, structured representations of information comprising a first structured representation, wherein each structured representation of the obtained structured representations comprises one or more pieces of information associated with confidence estimations determined by the IM. The obtaining may further comprise determining, from the confidence estimations, joint confidence estimations for pieces of information of different structured representations of the obtained structured representations that overlap each other. The obtaining may further comprise associating one or more first pieces of information of the first structured representation that overlap with one or more pieces of information of different structured representations of the obtained structured representations with determined corresponding joint confidence estimations. The obtaining may further comprise, based on the associating, replacing, for the one or more first pieces of information associated with first confidence estimations determined by the IM, at least part of the first confidence estimations with determined corresponding joint confidence estimations. The obtaining may further comprise obtaining the target structured representation as a result from the replacing.

Hence, it is enabled that an arbitrary structured representation of the obtained structured representations may be used as a basis for obtaining the target structured representation. Thus, it is enabled that several the target structured representations may be generated.

According to several examples of the present disclosure, the method may further comprise displaying the input document and the generated confidence heat map laying over the at least part of the input document.

It shall be noted that the overlayed confidence heat map may be made transparent.

Hence, a human engineer may easier, quicker and more reliable identify potential uncertainties, thus potential risks.

According to several examples of the present disclosure, the displaying may further comprise displaying a notification information if the confidence heat map comprises a confidence value violating a predetermined confidence threshold.

Hence, a human engineer may easier, quicker and more reliable identify a potential alarm.

According to several examples of the present disclosure, pieces of information comprised by the target structured representation may be obtained from pieces of information comprised by the one or more input documents.

Hence, it is enabled that the generated confidence heat map may be laid over at least part of an input document.

According to several examples of the present disclosure, the generating the confidence heat map may comprise indicating different confidences comprised by the confidence heat map in different colours and/or by different patterns.

Hence, manageability for a human engineer is even further increased.

According to several examples of the present disclosure, wherein the method may further comprise, based on an uncertainty indicated by confidences comprised by the confidence heat map, modifying the target structured representation based on using a further structured representation obtained from a further input document associated with the same process plant for the determining the joint confidence estimations.

It shall be noted that, generally, the target structured representation may be more reliable the more input documents are used to obtain the target structured representation. In doing so, single pieces of information associated with high uncertainties have less impact on the target structured representation since more overlapping pieces with low uncertainties may be used for obtaining the joint confidence estimations.

Hence, confidence of a human engineer in the results obtained from the AI (or IM) is even further increased.

According to several examples of the present disclosure, the method may further comprise obtaining a plurality of input documents associated with the same process plant. The obtaining the target structured representation may comprise obtaining a respective target structured representation for each input document of the plurality of input documents. The generating the confidence heat map based on the target structured representation may comprise generating a plurality of confidence heat maps based on the plurality of target structured representations. The method may further comprise laying each confidence heat map of the generated plurality of confidence heat maps over a respectively corresponding input document of the plurality of input documents.

Hence, it is enabled to easier, quicker and more reliable evaluate certainties for induvial parts of an entire process plant.

According to several examples of the present disclosure, the method may further comprise obtaining the plurality of input documents associated with the same process plant. The method may further comprise determining a joint confidence heat map for the plurality of input documents based on combining the plurality of confidence heat maps generated for the plurality of input documents. The method may further comprise laying the joint confidence heat map over the plurality of input documents representing at least part of the same process plant.

Hence, it is enabled to easier, quicker and more reliable evaluate certainties for an overview representation of at least part of an entire process plant

According to a second aspect, there is provided a data processing apparatus to assist in evaluating probability estimations in a structured representation of information in an industrial plant context. The data processing apparatus comprising a processor being configured to carry out the method of the first aspect.

The data processing apparatus according to the second aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to a third aspect, there is provided a data processing system to assist in evaluating probability estimations in a structured representation of information in an industrial plant context. The data processing system comprising a data processing apparatus of the second aspect. Additionally or alternatively, the data processing system comprises means for carrying out the method of the first aspect.

The data processing system according to the third aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

According to a seventh aspect, there is provided a use of at least one of a probability heat map of the first aspect, a data processing apparatus of the second aspect, a data processing system of the third aspect, an industrial plant of the fourth aspect, a computer-readable medium of the fifth aspect, and a computer program product of the sixth aspect.

The use according to the seventh aspect is advantageous in that it may participate in enabling to making uncertainty easier and quicker understandable or tangible for a human engineer in an industrial context. As a result, there is the advantage that the human engineer can easier, faster and more comprehensible understand, how possibly reliable (or unreliable) or how possibly confident (or unconfident) an artificial intelligence has worked and how the artificial intelligence has come up with provided results.

Optional features of the first aspect may form part of any of the second to seventh aspects, mutatis mutandis.

The method of the first aspect may be at least in parts computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

BRIEF DESCRIPTION OF THE DRAWINGS

A detailed description will now be given, by way of example only, with reference to the accompanying drawing, in which:

- Figure 1 illustrates an Engineering Data Funnel, an artificial intelligence (AI) to process engineering design specification documents into a comprehensive structured representation according to several examples of the present disclosure;
- Figure 2 illustrates an example input image with an overlay confidence heat map according to several examples of the present disclosure;
- Figure 3 schematically illustrates an entire process plant's representation sub-divided into several parts as indicated according to Figure 2;
- Figure 4 schematically illustrates the entire process plant's representation according to Figure 3 with an overlay confidence heat map over plant regions according to several examples of the present disclosure;
- Figure 5 illustrates a flowchart indicative of a method according to several examples of the present disclosure; and
- Figure 6 shows a block diagram schematically illustrating a data processing apparatus according to several examples of the present disclosure.

DETAILED DESCRIPTION

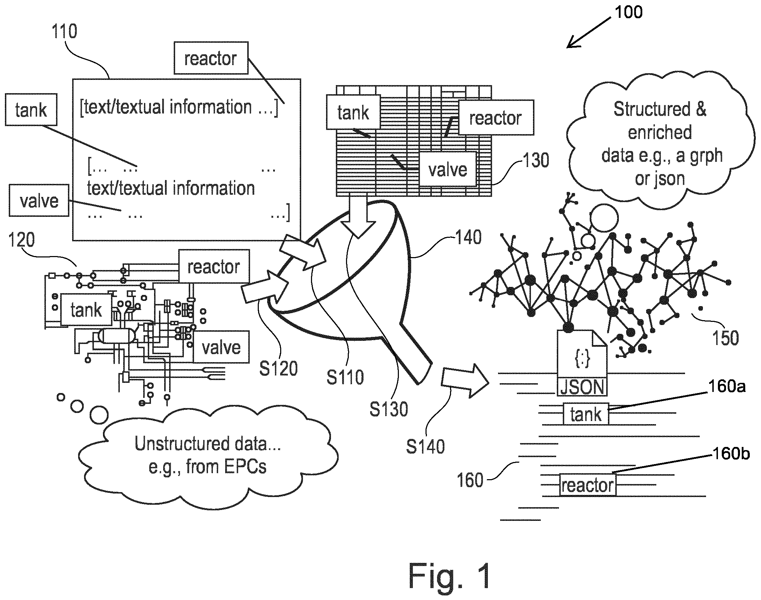

Referring now to Figure 1, by the "Engineering Data Funnel" (EDF) as schematically illustrated therein, there is provided according to several examples of the present disclosure an AI-based approach and prototype, using for example an ontology-enhanced large language model (LLM)-based agent and a mixture-of-experts system, to structure and formalize multimodal unstructured process design information as in PDF, Excel, and/or Word formats for example and make it available for engineering tools for the long-known "Automation of Automation".

However, due to an inherent probabilistic nature of AI-based data processing also in an industrial plant context, there is the problem or drawback that there is always a certain uncertainty in the data processing and, thus, in the processing results.

In view thereof, according to several examples of the present disclosure, the present disclosure aims to make this uncertainty understandable or tangible for an engineering expert user in an industrial context, i.a. by providing "probability heat maps" or also referred to as "confidence heat maps", which may enable to mark for example portions, areas and paragraphs in original and/or further processed documents, data or, in general, structured representations according to their estimated uncertainties and AI-based data processing confidence.

As a result, there is the advantage that a human engineer can easier, faster and more comprehensible understand, how possibly reliable (or unreliable) or how possibly confident (or unconfident) the AI has worked and how the AI has come up with the provided results.

Referring now to Figure 1, Figure 1 illustrates the EDF 140, which may be understood as being an artificial intelligence (AI) or an information model (IM) to process input data, for example engineering design specification documents, into a comprehensive structured representation according to several examples of the present disclosure.

In more detail, the EDF system 100 according to Figure 1 illustrates three different types of examples for engineering design specification documents, a first specification document 110 comprising textual information, a second specification document 120 comprising an image or topology image of several connected symbols and a third specification document 130 comprising a table. The specification documents 110, 120 and 130 may be understood as input documents, which are inputted to the EDF 140. The specification documents 110, 120 and 130 may be of data formats, for example the first specification document 100 may be in Word format, the second specification document 120 may be in PDF format and the third specification document 130 may be in Excel format. However, the specification documents are not limited to these types of formats. In general, it may be said that the specification documents 110, 120 and 130 may represent unstructured data, for example obtained from EPCs.

Each of the specification documents 110, 120 and 130 comprises one or more pieces of information. For example, among others, the first specification document 110 comprises pieces of information, i.e. textual information, related to a tank, a reactor and a valve. Further, among others, the second specification document 120 comprises pieces of information, i.e. connected symbols, related to a tank, a reactor and a valve. Moreover, among others, the third specification document 130 comprises pieces of information, i.e. content in rows, columns or cells of a table, related to a tank, a reactor and a valve.

The specification documents 110, 120 and 130 are input (in steps S110, S120 and S130 as indicated in Figure 1) to the EDF 140 and are processed by the EDF 140. As a result of the processing, the EDF 140 outputs, in S140, a structured representation.

At the processing in the EDF 140, the pieces of information, i.e. tank, reactor and valve, are identified in the specification documents 110, 120 and 130. It shall be noted that how specifically these pieces of information are identified in the specification documents 110, 120 and 130 does not form part of the present disclosure. However, several well-known LLM-based and/or image processing-based solutions may be used for identification of these (and/or other) pieces of information in the specification documents 110, 120 and 130.

The structured representation obtained from the EDF 140 may be understood to represent a representation of the joint information obtainable from the specification documents 110, 120 and 130. Alternatively, the structured representation obtained from the EDF 140 may be understood to represent a respective structured representation corresponding to each of the specification documents 110, 120 and 130. As a mere example only for improving understandability, the EDF 140 may have identified from the second specification document 120 based on image processing that a tank may be connected to a valve and that the valve may further be connected to a reactor. However, since the second specification document 120 may be of a low quality, for example the image may be pixelated, the connection of the tank to the reactor via the valve may be of low certainty. From the first specification document 110, the EDF 140 may learn for example with a higher certainty that the tank is indeed connected to the reactor via the valve, and from the third specification document 130, the EDF 140 may learn for example with a specific certainty a possible type of the tank and a possible type of the reactor. Thus, for example, the structured representation may comprise with comparatively higher certainty that a tank is connected to a reactor via a valve and that said tank and reactor may be of a certain type.

However, as already derivable therefrom, such obtained structured representation still comprises uncertainties, in particular pieces of information associated with certain uncertainty (or certainty) values. Identifying, understanding and handling such uncertainties is a complex, time-consuming and error-prone task for a human engineer for example. According to several examples of the present disclosure, at least part of such drawbacks is reduced.

In general, one or more structured representations may be output by the EDF 140 in different ways or formats, for example in a structured visualization 150 or a structural textual information 160, like a JSON file.

In more detail, the EDF 140 or EDF system 100 may include (among others) a vision model trained to recognize components and/or symbols and connections in input documents, for example in P&ID documents like the first and second specification documents 110 and 120, for example as PDF files, image files. Additionally or alternatively, the EDF 140 or EDF system 100 may include a language model trained to process text in Control Narratives documents, for example in input documents like the specification documents 110, 120 and 130, for example, among others, in PDF files, texts, text files, or tables.

However, the EDF system 100 may never be perfect, and it may very likely struggle with certain symbols and/or connections (for example as shown in the second specification document 120) or with certain text paragraphs (for example as shown in the first specification document 110), e.g., when the symbols come in bad resolution, or are rotated, or simply differ from the training data, or, e.g., when the text/sentences are complex with multiple ambiguous relationships, which simply demand too much from the transformers' attention mechanism, etc.

In these cases, to address this limitation, according to several examples of the present disclosure, there are i.a. provided a system and method, which provide, when given one or more input engineering design specification document(s) like the specification documents 110, 120 and 130 for example, a confidence heat map to overlay the original document(s) (i.e. the specification documents 110, 120 and 130 for example), which may show a machine learning (ML) model's estimated probability that it can detect or understand the correct thing, i.e. a symbol and/or connection or text meaning and/or relation for example, in a given pixel-location/area and/or text sentence/paragraph.

Hence, with the proposed system and method, it is now only shown what component and what pipe or attributes/features are detected in the P&ID and CN for example, but additionally, it is provided to the user a "confidence heat map" that may show an ML model's estimated probability that it can (properly) detect the components (and connections and attributes, etc.) in a given location of the image or section/paragraph in the text.

A patch of low-resolution symbols, fuzzy or crossing lines, or a complicated long sentences or paragraphs, for instance, could have a higher estimated uncertainty than, e.g., a simple chain of high-resolution frequently occurring symbols, or a set of simple SPO-sentences with single-variable linear relationships.

It shall be noted that the system and method as disclosed herein can arbitrarily be refined when combined for one or more engineering design specification documents:

- Confidence heat maps (or probability heat maps as also referred to in the following) can be produced and provided for single-expert-model outputs: i.e., one processed engineering design specification document, e.g., a P&ID, will yield one output, e.g., a list of components/symbols and connections detected, along with one heat map, which can be overlayed.

- Confidence heat maps however also can be combined from several single-expert model outputs, i.e., e.g., two documents, a P&ID and a Control Narrative, from a same engineering project or same process plant, will naturally complement each other: for example, given a document 1 (a P&ID, like the second specification document 120), and given a document 2 (a CN, like the first specification document 110), whereby from document 1 it is already obtained an output and an according probability distribution, wherein for document 2, it is now used the information obtained from document 1 and is computed a *conditional*, i.e., combined, probability distribution $P(X\_document\ 1\ |\ Y\_document\ 2)$, where X, Y are symbols or components in different documents 1 and 2. This could lead to an enhanced or changed $P(X\_document\ 1)$ now being $P(X\_document\ 1\ |\ Y\_document\ 2)$ (where Y can be anything in document 2, including X in document 2.

This can of course be visualized, too, by overlaying the confidence heat maps over one another.

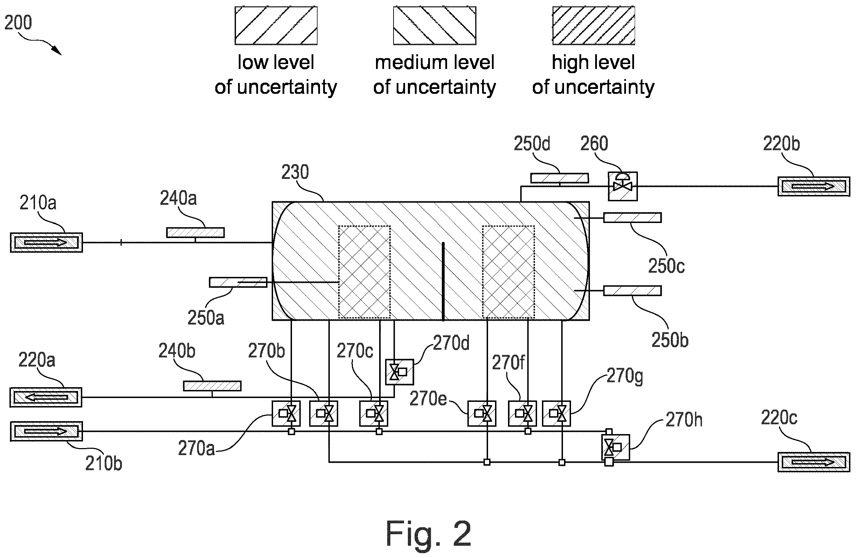

Furthermore, this layered approach can also be used to intentionally process (if available) further documents from a same engineering project in order to decrease a given region's uncertainty: for example, if a region in the P&ID may be deficient with high uncertainty / low confidence, and may be shown as such to the human engineer or user, then he/she could try to provide the EDF 140 with more information, i.e., a further design specification document, about the respective region, or simply (in case of a large P&ID) with a high-resolution image of the respective part, as indicated in Figure 2 as an example.

It shall be noted that the layered approach with confidence heat maps can also be used to reconfirm confident areas, by overlaying with confidence heat maps resulting from other modalities, i.e., if a "certain" confidence heat map area, which may result from a P&ID image (for example from the second specification document 120), may remain to stay "certain" after overlaying it with a confidence heat map resulting from a CN text (for example from the first specification document 110), then this may reconfirm a likely correct processing.

Generally, according to several examples of the present disclosure, a confidence heat map could be an optional "transparent overlay", which can be blended in/off to see where the AI is confident and where it is not.

This functionality may be very beneficial for the engineering experts or user to help him/her faster find potential errors or contradictory / incomplete structural representations, i.e. contradictory / incomplete outputs from the EDF 140 for example.

In order to allow for transferability and broader use of confidence information, according to several examples of the present disclosure, it is included the probability, uncertainty, or confidence information along with the detected content (like symbol, pipe, text, component, relation, etc.) in XML format. Thus, standard engineering tools, for example as available in applicant's product/solution portfolio, can use it for visualization in common or well-known tools.

Referring now to Figure 2, Figure 2 illustrates an example input image with an overlay confidence heat map according to several examples of the present disclosure.

The input image 200 according to Figure 2 may represent for example an "evaluated" second specification document 120 according to Figure 1.

Figure 2 shows, as an example, three different patterns that may represent three different levels of certainty (uncertainty). For example, low level uncertainty is illustrated by a pattern where the lines run in a direction from bottom left to top right. A medium level uncertainty is illustrated by a pattern where the lines run in a direction from top left to bottom right. A high level uncertainty is illustrated by a pattern where the lines also run in a direction from bottom left to top right, but the lines are closer together than in the low level uncertainty pattern. There may be indicated (less or) more than three levels of uncertainty, for example (only one or two) four or more levels.

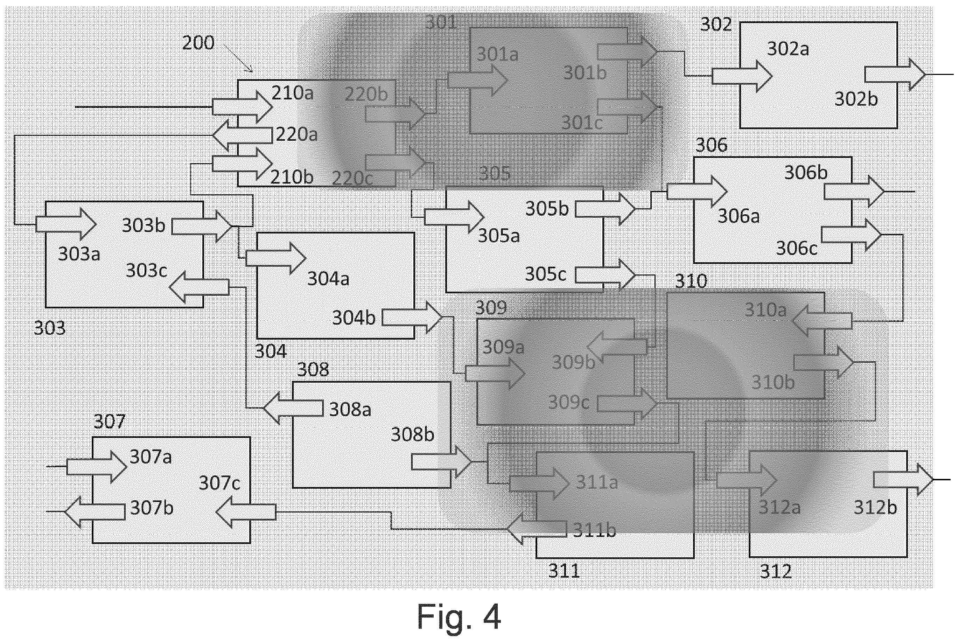

Additionally or alternatively, different shades of gray or different colors may be used to illustrate different certainty (uncertainty) levels or certainty (uncertainty) values. For example with reference to Figure 2, the low level uncertainty may be represented by a green color, the medium level uncertainty may be represented by a yellow color, and the high level uncertainty may be represented by a red color. However, instead of 'green', 'yellow' and 'red', different and/or more colors can be used. For example, for certainty (uncertainty) values in a range from 1 to 100, uncertainty values close to 1 may be represented by a light grey, and the closer the uncertainty value comes to 100, the darker the light grey becomes until it may reach a darkest grey for an uncertainty value of 100. It shall be noted that such representation in different shades of grey is shown as an example in Figure 4. As another example, instead of a continuous change from a light grey to a dark grey, there may be illustrated a continuous change from a first color ("start color") to a second color ("end color"). The change from a start color to an end color may take place via one or more intermediate colors, for example from 'green' via 'yellow' to 'red'.

In more detail, Figure 2 shows a symbol illustrating a tank 230. Input connections 210a and 210b are illustrated that provide an input flow into the tank 230. Output connections 220a, 220b and 220c are illustrated that provide an output flow from the tank 230. The tank 230 and its corresponding input connections 210a, 210b and output connections 220a, 220b, 220c are visually indicated to be associated with a second level of certainty, for example the medium level of certainty (i.e. the medium level of uncertainty). Figure 2 further shows flow controlling entities 240a and 240b for controlling a flow for example, that are visually indicated to be associated with a third level of certainty, for example the low level of certainty (i.e. the high level of uncertainty). Moreover, Figure 2 further shows flow controlling entities 250a, 250b, 250c and 250d for controlling a flow for example, that are visually indicated to be associated with a first level of certainty, for example the high level of certainty (i.e. the low level of uncertainty). Still further, Figure 2 shows different types of valves 260 and 270a to 270h, that are visually indicated to be associated with the first level of certainty, for example the high level of certainty (i.e. the low level of uncertainty).

In the following, two cases are to be considered.

According to a first case, it shall be noted that with reference to Figure 1, the second specification document 120 may be processed alone (i.e. with no other specification documents) by the EDF 140, and a result of such processing may be the image 200 or (topology image) according to Figure 2. Thus, the second specification document 120 may comprise as an input image in its original version the components 210a to 270h as illustrated in Figure 2 without any associated certainty evaluation. After the processing in the EDF 140 however, certainties like certainty levels or certainty values may be associated to each of the components 210a to 270h, which may be illustrated by a corresponding confidence heat map to arrive at the image shown in Figure 2. These associated certainty levels or certainty values may thus be included in a confidence or probability heat map, and such confidence heat map may thus be overlayed the second specification document 120 in its original version. This may result in the image as shown in Figure 2. The image as shown in Figure 2 may be further processed, for example similar as indicated below with reference to the second case.

According to a second case, however, it shall be noted that, according to several examples of the present disclosure, the second specification document 120 may be processed alone (i.e. with no other specification documents) by the EDF 140, and a result of such processing may be that several of the components 210a to 270h are associated with a low certainty level or low certainty values, for example the tank 230 may be associated with a low certainty level or low certainty value. Based thereon, one or more further specification documents, for example the first and third specification documents 110 and 130 (with the specification documents 110, 120 and 130 corresponding to a same engineering project or a same process plant) may additionally by processed by the EDF 140. As a result therefrom, for example, as already indicated above with reference to Figure 1, the tank 230 may be identified with higher certainty, and a result from such additional processing of the first and/or third specification documents 110 and 130 may be, that the 230 in the second specification document 120 may be identified with higher certainty. Thus, in the confidence heat map overlaying the second specification document 120 in its original version, the tank 230 may be indicated to be associated with a medium level of certainty or a medium certainty value. Hence, said with other words, the image as shown according to Figure 2 according to the second case may represent a result from such additional processing. The image as shown in Figure 2 may be further processed, for example a processing according to the second case may be repeated and/or continued.

Thus, considering the first case and the second case as outlined above, it shall be noted that in a more general way, an "evaluated" specification document, i.e. a specification document in its original version with associated certainty levels or certainty values (obtained for example after the processing by the EDF 140) may be understood as a specification document having a confidence heat map laying over. Such associated certainty levels or certainty values may be obtained from evaluating alone the specification document in its original version (i.e. first case) or may be obtained from evaluating two or more specification documents (i.e. second case), that are in an original version and/or in an "evaluated" version, subsequently and/or simultaneously.

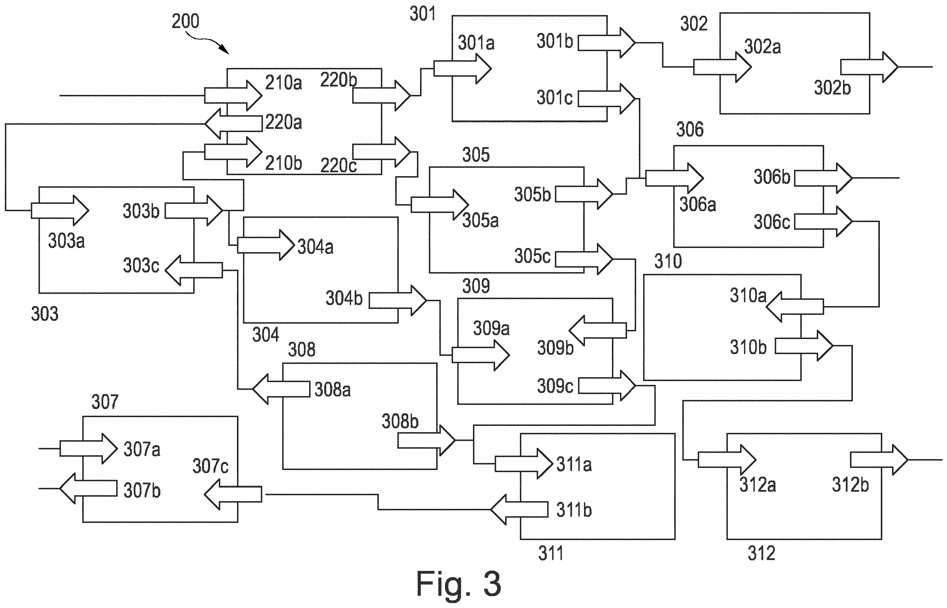

Referring now to Figure 3, several specification documents 200 and 301 to 312 are illustrated. The several specification documents 200 and 301 to 312 correspond to a same engineering project or a same process plant. The documents 200 and 301 to 312 may represent "evaluated" specification documents as illustrated according to Figure 2 and/or may represent specification documents in its original versions, like the specification documents 110, 120 and 130 according to Figure 1.

Each of the several specification documents 200 and 301 to 312 comprises respective input connections and output connections. For example with reference to specification document 200, reference signs 210a and 210b represent input connections (leading into the tank 230 according to Figure 2), and reference signs 220a, 220b, 220c and 220d represent output connections (leading out of the tank 230 according to Figure 2). For example, the output connection 220b is connected to the input connection 301a of the specification document 301. In the specification document 301, the output of the tank 230 may be further processed and/or may be used in a subsequent processing step. Further connection details are derivable from Figure 3.

Referring now to Figure 4, Figure 4 schematically illustrates the process plant's representation according to Figure 3 with an overlay confidence heat map over plant regions according to several examples of the present disclosure. According to Figure 4, a confidence heat map is laid over the process plant's representation according to Figure 3. As already indicated above, lighter shades of grey represent lower uncertainty values, wherein darker shades of grey represent higher uncertainty values. Based thereon, a human engineer or user may easily and quickly recognize that there may be an uncertainty (i.e. a potential incorrect identification for example) in the processing of the process plant when an output of the tank 230 is further used or processed in the subsequent processing reached via input connection 301a. Similar, the human engineer or user may easily and quickly recognize that there may be an uncertainty (i.e. a potential incorrect identification for example) in the processing of the process plant associated with the specification documents 309, 310 and 311.

It shall be noted the following. According to several examples of the present disclosure, in case the first specification document 110 according to Figure 1 may be used as a basis for laying a confidence heat map over, such confidence heat map may associate certainty levels or certainty values to induvial words, phrases, sentences or paragraphs as included in the textual information of the first specification document 110.

Thus, according to several examples of the present disclosure, there is provided a system and method for visualization of AI/ML model confidence/uncertainty values in process design specification documents. For example, there is provided a system and method using confidence heat maps for visualization, wherein a visualization of confidence heat maps may be for single or multiple / combined documents. The system and method may be based on an approach to obtain probabilities/uncertainties (confidence values) for AI-based engineering data or document processing. Moreover, there is provided a system and method for obtaining XML representations of confidence heat maps for example, so the confidence information can be shown in traditional engineering tools as (optional and combinable) transparent overlayings.

According to several examples of the present disclosure, a more detailed example is given for reasons of understandability.

**By the example of a P&ID (image file, for example second specification document 120) and the EDF 140 with an image processing expert model (a vision model):**

Breaking down, how an ML model / a neural network, particularly a vision model, detects symbols in an image (e.g., a P&ID) and determines (from a set of possible target symbols (e.g., from a standard) to be recognized) the most likely one, along with the probabilities associated with each symbol:

**1. Neural Network Structure**

A vision model, like a Convolutional Neural Network (CNN), or similarly for a transformer-based model, is typically used for image recognition tasks. A brief overview of its possible structure (in the case of a CNN) is as follows:

- *Input Layer.* Takes the image as input. The image is usually represented as a multidimensional array of pixel values.
- *Convolutional Layers:* Apply convolutional filters to the input image to detect features such as edges, textures, and simple shapes. These layers help the model learn spatial hierarchies of features.
- *Pooling Layers:* Reduce the dimensionality of the feature maps, making the computation more efficient and helping to create invariance to small translations.
- *Fully Connected Layers:* Flatten the pooled feature maps and pass them through dense layers to combine the features and make predictions.
- *Output Layer.* Produces the final output, typically a probability distribution over the possible target symbols.

**2. Detecting Symbols**

The process of detecting symbols in an image involves several steps:

a. Preprocessing the Image: The input image is usually preprocessed (e.g., resizing, normalization) to fit the model's input requirements.
b. Feature Extraction: Convolutional layers scan the image with various filters to extract features. Early layers might detect simple patterns, while deeper layers detect more complex structures, such as parts of symbols.
c. Flattening and Classification: The extracted features are flattened into a vector and passed through fully connected layers. These layers combine the features to make a final prediction.

### 3. Finding the Most Likely Symbol

The output layer of the network typically uses a *softmax activation function,* especially in classification tasks. (Note, however, there are also other activation functions suitable for several examples of the present disclosure). The softmax function converts the raw output scores (logits) into probabilities, ensuring they sum to 100%.

The **softmax function** is defined as:

$$P(y_i) = \frac{e^{z_i}}{\sum_j e^{z_j}}$$

where $e^{z_i}$ is the raw score (logit) for the class i, and $P(y_i)$ is the probability of the target class i.

The output of the softmax function is a **probability distribution** over all possible target symbols.

For example, if the possible symbols are {A, B, C}, where A is a tank symbol, B is a reactor symbol, and C is a distillation column symbol, the output might look like:

- P(A) = 0.7
- P(B) = 0.2
- P(C) = 0.1

### 4. Determining the Most Likely Symbol

The model selects the symbol with the highest probability as the most likely prediction. In the example above, the model would predict A as the most likely symbol because it has the highest probability (0.7).

### 5. Outputting the Result

The model typically outputs two main pieces of information:

- **Predicted Symbol:** The symbol with the highest probability.
- **Probability Distribution:** The probabilities of all possible symbols.

In practical applications, this might be presented as:

- **Prediction:** Symbol A
- **Probabilities:** {A: 0.7, B: 0.2, C: 0.1}

**A thus resulting Example Workflow might then read as follows:**

1. Input: Image of a P&ID with symbols to be recognized.
2. Preprocessing: Optionally resize the image to 28x28 pixels and normalize pixel values.
3. Feature Extraction: Convolutional layers detect edges and curves of the character.
4. Classification: Fully connected layers combine features to predict the character.
5. Softmax Activation: Convert logits to probabilities (independent of the actual ML model architecture, i.e., no matter if CNN or transformer NN, etc.).
6. Output: Most likely symbol (e.g., 'A') with its probability (e.g., 0.7), and probabilities for other symbols.

This process/workflow allows ML models to effectively recognize and classify symbols in images with a quantifiable measure of confidence.

Note, that this example described an image processing scenario (detecting symbols in an image), but the equivalent procedure and setup applies for other ML models, too. I.e., these models also have output layers with *softmax activation functions,* and with resulting *probability distributions,* and with two-fold outputting of predictions and according probability distributions.

### Interpreting Probabilities

- Most Likely Symbol: The symbol with the highest probability (e.g., A with 0.7).
- Less Likely Symbols: Symbols with lower probabilities (e.g., B with 0.2, C with 0.1).

**These probabilities give a measure of the model's <u>confidence</u> in its predictions. A higher probability (i.e., lower uncertainty) for the predicted symbol indicates higher confidence.**

Instead of showing to the human engineer or user **probability values,** it is now represented these probabilities in a **confidence heat map,** which can be overlaid to the original engineering design specification document (e.g., the P&ID (second specification document 120) or the CN (first specification document 110), etc.).

Such a heat map could have a color code from red to green, for example, with red standing for high uncertainty of the model and green standing for low uncertainty / high confidence of the model.

Hereby, high confidence/certainty (low uncertainty) means: The model is very certain about its prediction. This means the probability of the predicted class is high. Similarly, low confidence/certainty (high uncertainty) means: The model is less certain about its prediction. This means the probability of the predicted class is low, and probabilities for other classes are more evenly distributed.

According to several examples of the present disclosure, it shall be noted that the creating of a confidence heat map that overlays an original input image and that uses a color code to represent the model's confidence or uncertainty for example, can optionally, beyond the above described steps, involve also a step for Class Activation Mapping (CAM) or Grad-CAM or other variations of CAM:

CAM can also be used to evaluate the model's confidence (and thereon-based heat maps) across different regions (for example like different pieces of information) of the image (as opposed to only single/separate objects/symbols). The CAM method highlights the regions of the image that are important for the model's decision. It works as follows:

1. Forward Pass: Pass the input image through the network to get the class scores before applying the softmax function.
2. Feature Maps Extraction: Extract the feature maps from the last convolutional layer.
3. Weights Extraction: Extract the weights of the output layer (the dense layer that comes right after the last convolutional layer).
4. Weighted Sum: Compute the weighted sum of the feature maps using the weights corresponding to the predicted class.

The resulting heat map will highlight the regions that contributed most to the prediction.

The CAM can then be normalized to a range of [0, 1] and mapped to a color scale, for example from green to red, to represent different levels of confidence/certainty.

In the resulting heat map:

- Green regions may indicate areas where the model is more confident (high activation).
- Red regions may indicate areas where the model is less confident (low activation).

By visualizing this heat map over the original image, one can see which parts of the image the model relies on most for its prediction and where it is uncertain.

This approach hence provides a more advanced visual representation of model confidence, helping to understand and interpret the model's predictions better.

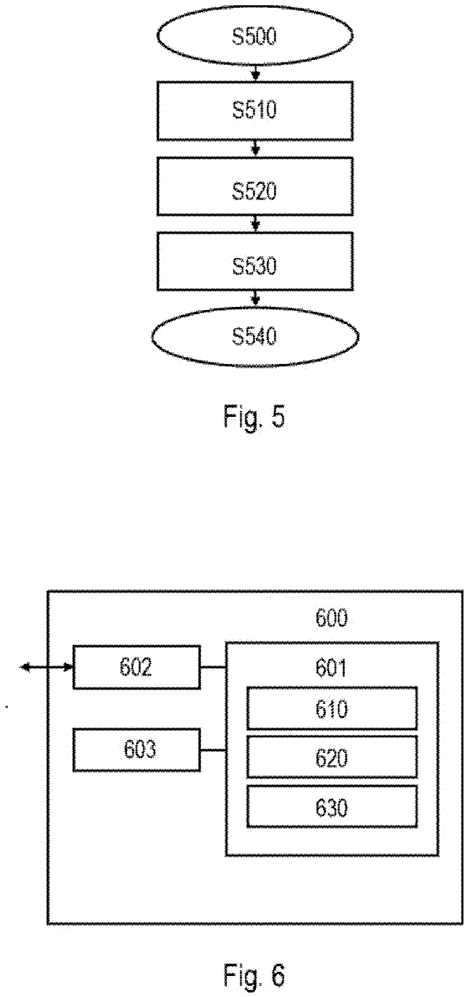

Referring now to Figure 5, Figure 5 illustrates a flowchart indicative of a method according to several examples of the present disclosure. The method is to assist in evaluating confidence estimations in a structured representation of information in an industrial plant context.

According to several examples of the present disclosure, the EDF 140 or the EDF system 100 according to Figure 1 may be configured to perform the method as illustrated according to Figure 5.

The method starts in S500.

In S510, the method comprises obtaining a target structured representation of information 150, 160 comprising one or more target pieces of information 160a, 160b associated with confidence or uncertainty (certainty) estimations determined by an IM 140, wherein at least part of the one or more target pieces of information overlap with one or more pieces of information comprised by one or more different structured representations.

In S520, the method comprises generating a confidence heat map based on the target structured representation, wherein the generated confidence heat map indicates confidences for the one or more target pieces of information based on the associated confidence estimations.

In S530, the method comprises laying the generated confidence heat map over at least part of an input document of one or more input documents 110, 120, 130 inputted S110, S120, S130 to the IM and based on which the target structured representation and the one or more different structured representations are obtained by the IM, wherein the one or more input documents are associated with a same process plant 300.

The method ends in S540.

According to several examples of the present application, a specific example may be as follows.

In a first step, a first input document or first specification document may be input to the IM and it may be obtained from the IM a first structured representation of information based on the input first input document. In a second step, a second input document or second specification document may be input to the IM and it may be obtained from the IM a second structured representation of information based on the input second input document. The first structured representation may comprise a first piece of information associated with a first uncertainty (certainty) estimation determined by the IM, and the second structured representation may comprise a second piece of information associated with a second uncertainty (certainty) estimation determined by the IM, wherein a content of the first piece of information overlaps a content of the second piece of information.

Additionally or alternatively, in the first step, an "evaluated" first input document may be obtained from the IM, i.e. it may be obtained from the IM the first input document and at least one piece of information comprised by the first input document (for example a symbol or text element) may be associated with an uncertainty level or an uncertainty value determined by the IM. Additionally or alternatively, in the second step, an "evaluated" second input document may be obtained from the IM, i.e. it may be obtained from the IM the second input document and at least one piece of information comprised by the second input document (for example a symbol or text element) may be associated with an uncertainty level or an uncertainty value determined by the IM.

In a third step, from the first uncertainty estimation and the second uncertainty estimation, a third uncertainty estimation for the content of the first piece of information overlapping the content of the second piece of information may be determined, for example by the IM. It shall be noted that the first and second uncertainty estimations may be acquired from the first and second structured representations and/or from the "evaluated" first and second input documents. Moreover, according to various examples of the present disclosure, in general and without being limited to this specific example, it shall be noted that the first and second structured representations (or any further structured representation) may be understood as representing first and second parts of a same structured representation.

In a fourth step, at least one of the first piece of information in the first structured representation and the second piece of information in the second structured representation may be associated with the calculated third uncertainty estimation. Additionally or alternatively, in the fourth step, at least one of the first piece of information in the "evaluated" first input document and the second piece of information in the "evaluated" second input document may be associated with the calculated third uncertainty estimation.

In a potential fifth step, the "evaluated" first or second input document associated with the calculated third uncertainty estimation and an "evaluated" third input document may be used as input to the IM and the above-outlined first to fourth process steps, which are outlined as an example with reference to two input documents or two structured representations, may be repeated with such "evaluated" first or second input document and such third input document.

In doing so, by saying that two input documents or two structured representations are used, it is also meant that several more input documents or several more structured representations are used. This is because, according to several examples of the present disclosure without being limited to this specific example, an input document may also be understood as an "evaluated" input document that resulted from the IM having processed two or more ("evaluated" and/or "non-evaluated") input documents. This is further because, according to several examples of the present disclosure without being limited to this specific example, a structured representation may also be understood as a structured representation that resulted from the IM having processed two or more input documents or structured representations.

Thus, with reference to Figure 5, Step S510, additionally or alternatively to obtaining the target structured representation, the method may comprise to obtain a target "evaluated" input document. Accordingly, the one or more different structured representations may be understood to be one or more different "evaluated" input documents. Similarly, S520 may thus also be understood that a confidence heat map is generated based on the target "evaluated" input document. Hence, S530 may also be understood that the generated confidence heat map is then laid over at least part of the target "evaluated" input document.

Hence, according to several examples of the present disclosure, an "evaluated" input document may also be understood as representing a structural representation of information.

Referring now to Figure 6, Figure 6 shows a block diagram schematically illustrating a data processing apparatus 600 according to several examples of the present disclosure. In particular, according to several examples of the present disclosure, there is provided a data processing apparatus 600 to assist in evaluating probability estimations in a structured representation of information in an industrial plant context. The data processing apparatus 600 comprises a processor 601 being configured to carry out the method of Figure 5.

According to several examples of the present disclosure, the data processing apparatus 600 may comprise means to function as such EDF 140 as outlined above with reference to Figure 1.

In more detail, according to various examples, a data processing apparatus 600 being configured to carry out the method of Figure 5 may comprise a processing circuitry, a processing function, a processing means, a processing unit or a processor 601, which enables the data processing apparatus 600 to participate to assist in evaluating probability estimations in a structured representation of information in an industrial plant context. The processor 601 may comprise one or more processing portions or functions, wherein the processing portions or functions may be provided as one or more physical or virtual entities. The data processing apparatus 600 may comprise one or more communication interfaces 602. The data processing apparatus 600 may further comprise a memory or memory unit 603 for storing data, programs and/or instructions to be executed by the processor. The memory 603 may be a memory internal to the data processing apparatus 600 or may be a memory external to the data processing apparatus 600, for example at a cloud server. The processor 601 may comprise one or more portions, which enable the data processing apparatus 600 to execute the method of Figure 5 for example. According to several examples of the present disclosure, an obtaining portion 610 may be configured to perform such obtaining according to S510 of Figure 5, a generating portion 620 may be configured to perform such generating according to S520 of Figure 5, and a laying over portion 630 may be configured to perform such laying over according to S530 of Figure 5.

According to several examples of the present disclosure, the respective portions of the data processing apparatus 600 may also be understood as means for carrying out the certain function.

According to several examples of the present disclosure, there is provided a data processing system to assist in evaluating probability estimations in a structured representation of information in an industrial plant context. The data processing system comprises the data processing apparatus 600 according to Figure 6 and/or comprises means for carrying out the method according to Figure 5. The data processing system may represent such EDF system 100 as outlined above with reference to Figure 1.

According to several examples of the present disclosure, there is provided an industrial plant comprising the data processing apparatus 600 according to Figure 6 and/or the data processing system as outlined above.

According to several examples of the present disclosure, there is provided a computer-readable medium comprising instructions which, when executed by a computing system, causes the computing system to perform the method according to Figure 5. The computer-readable medium may be transitory or non-transitory, volatile or non-volatile.

According to several examples of the present disclosure, there is provided a computer program product comprising instructions which, when executed by a computing system, enable or cause the computing system to perform the method according to Figure 5. The computer program product may comprise a computer-readable medium comprising instructions of the computer program product. The computer-readable medium as mentioned above may have stored thereon the computer program product.

According to several examples of the present disclosure, there is provided a use of the data processing apparatus 600, the data processing system as outlined above, the industrial plant as outlined above, the computer-readable medium as outlined above and/or the computer program product as outlined above.

The method according to Figure 5 may be at least in parts computer implemented.

Optional features of the method according to Figure 5 may form part of the data processing apparatus 600, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

**Claims**

1.  A method to assist in evaluating confidence estimations in a structured representation of information in an industrial plant context, the method comprising:

    obtaining (S510) a target structured representation of information (150, 160) comprising one or more target pieces of information (160a, 160b) associated with confidence estimations determined by an information model, IM, (140), wherein at least part of the one or more target pieces of information overlap with one or more pieces of information comprised by one or more different structured representations;
    generating (S520) a confidence heat map based on the target structured representation, wherein the generated confidence heat map indicates confidences for the one or more target pieces of information based on the associated confidence estimations; and
    laying (S530) the generated confidence heat map over at least part of an input document of one or more input documents (110, 120, 130) inputted (S110, S120, S130) to the IM and based on which the target structured representation and the one or more different structured representations are obtained by the IM, wherein the one or more input documents are associated with a same process plant (300).

2.  The method according to claim 1,

    wherein the confidence estimations associated with target pieces of information that overlap pieces of information of different structured representations are joint confidence estimations;
    wherein the method further comprises determining a joint confidence estimation for a target piece of information that overlaps with one or more pieces of information of the different structured representations based on calculating a weighted sum over the respective confidence estimations associated with the target piece of information and the one or more pieces of information of the different structured representations that overlap each other.

3.  The method according to claim 2, wherein the calculating the weighted sum comprises
    assigning a higher weight to a confidence estimation associated with a first certainty than to a confidence estimation associated with a second certainty lower than the first certainty.

4.  The method according to any of claims 1 to 3, wherein the obtaining the target structured representation comprises

    obtaining, based on inputting the one or more input documents (110, 120, 130) to the IM, structured representations of information comprising a first structured representation, wherein each structured representation of the obtained structured representations comprises one or more pieces of information associated with confidence estimations determined by the IM;
    determining, from the confidence estimations, joint confidence estimations for pieces of information of different structured representations of the obtained structured representations that overlap each other;
    associating one or more first pieces of information of the first structured representation that overlap with one or more pieces of information of different structured representations of the obtained structured representations with determined corresponding joint confidence estimations;
    based on the associating, replacing, for the one or more first pieces of information associated with first confidence estimations determined by the IM, at least part of the first confidence estimations with determined corresponding joint confidence estimations; and
    obtaining (S140) the target structured representation as a result from the replacing.

5.  The method according to any of claims 1 to 4, further comprising displaying the input document and the generated confidence heat map laying over the at least part of the input document.

6.  The method according to claim 5, wherein the displaying further comprises displaying a notification information if the confidence heat map comprises a confidence value violating a predetermined confidence threshold.

7. The method according to any of claims 1 to 6, wherein pieces of information (160a, 160b) comprised by the target structured representation are obtained from pieces of information (210a, 210b, 220a - 220c, 230, 240a, 240b, 250a - 250d, 260, 270a - 270h) comprised by the one or more input documents (110, 120, 130).

8. The method according to any of claims 1 to 7, wherein the generating the confidence heat map comprises indicating different confidences comprised by the confidence heat map in different colours and/or by different patterns.

9. The method according to any of claims 1 to 8, further comprising, based on an uncertainty indicated by confidences comprised by the confidence heat map, modifying the target structured representation (150, 160) based on using a further structured representation obtained from a further input document associated with the same process plant (300) for the determining the joint confidence estimations.

10. The method according to any of claims 1 to 9, further comprising

obtaining a plurality of input documents (110, 120, 130, 200, 301 - 312) associated with the same process plant (300);
the obtaining the target structured representation comprises obtaining a respective target structured representation for each input document of the plurality of input documents;
the generating the confidence heat map based on the target structured representation comprises generating a plurality of confidence heat maps based on the plurality of target structured representations; and
laying each confidence heat map of the generated plurality of confidence heat maps over a respectively corresponding input document of the plurality of input documents.

11. The method according to any of claims 1 to 10, further comprising

obtaining the plurality of input documents (110, 120, 130, 200, 301 - 312) associated with the same process plant (300);
determining a joint confidence heat map for the plurality of input documents based on combining the plurality of confidence heat maps generated for the plurality of input documents; and
laying the joint confidence heat map over the plurality of input documents representing at least part of the same process plant.

12. A data processing apparatus (600) to assist in evaluating probability estimations in a structured representation of information in an industrial plant context, the data processing apparatus comprising a processor being configured to carry out the method of any of claims 1 to 11.

13. A data processing system (100) to assist in evaluating probability estimations in a structured representation of information in an industrial plant context, the data processing system (100) comprising the data processing apparatus (600) according to claim 12.

14. A computer-readable medium comprising instructions which, when executed by a computing system, cause the computing system to perform the method of any of claims 1 to 11.

15. A computer program product comprising instructions which, when executed by a computing system, enable and/or cause the computing system to perform the method of any of claims 1 to 11.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

**Application Number**

EP 24 19 8429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE JOONHYUK ET AL: "Development of an AI-based image/ultrasonic convergence camera system for accurate gas leak detection in petrochemical plants", HELIYON, 1 April 2024 (2024-04-01), page e28905, XP093252550, GB ISSN: 2405-8440, DOI: 10.1016/j.heliyon.2024.e28905 Retrieved from the Internet: URL:https://www.cell.com/heliyon/pdf/S2405-8440(24)04936-3.pdf [retrieved on 2025-02-20] * abstract * * page 5, line 1 - page 6, line 6 * * page 10, lines 6-11 * * page 12, lines 14-16 * * figures 1, 6, 13-15 * | 1-15 | INV. G06F30/00 G06V10/22 G06V10/94 |
| | ----- | | |
| | | | **TECHNICAL FIELDS SEARCHED (IPC)** |
| | | | G06F G06V |

The present search report has been drawn up for all claims

| Place of search | Date of completion of the search | Examiner |
|---|---|---|
| The Hague | 20 February 2025 | Bykowski, Artur |

EPO FORM 1503 03.82 (P04C01)